# EUROPÄISCHE PATENTANMELDUNG

(11) **EP 2 604 888 A1**
(43) Veröffentlichungstag der Anmeldung: **19.06.2013**
(21) Anmeldenummer: 12193619.9
(22) Anmeldetag: 21.11.2012
(51) Int. Cl.: F16H 1/16, F16H 37/04

(54) **Winkelgetriebe für einen Elektromotor und Elektromotor mit einem Winkelgetriebe**

(30) Priorität: 15.12.2011 DE 102011088645
(71) Anmelder: Dunkermotoren GmbH, 79848 Bonndorf/Schwarzwald (DE)
(72) Erfinder: Tröndle, Stefan, 79848 Bonndorf (DE); Tascher, Gerhard, 79859 Schluchsee (DE); Stegerer, Egon, 79843 Löffingen (DE)
(74) Vertreter: Dreiss

(57) **Zusammenfassung**

Die Erfindung betrifft ein Winkelgetriebe (15) für einen Elektromotor (11), wobei das Winkelgetriebe (15) eine an einer Getriebeeingangswelle (17) angeordnete Schneckengetriebestufe (19) aufweist. Um ein Winkelgetriebe (15) für einen Elektromotor (11) anzugeben, das bei einem guten Wirkungsgrad auch eine hohe Untersetzung ermöglicht, geräuscharm arbeitet und zudem kostengünstig herstellbar ist, wird vorgeschlagen, dass der Schneckengetriebestufe (19) mindestens eine Stirnradgetriebestufe (29, 31) nachgeschaltet ist.

## Beschreibung

Die Erfindung betrifft ein Winkelgetriebe für einen Elektromotor, wobei das Winkelgetriebe eine an einer Getriebeeingangswelle angeordnete Schneckengetriebestufe aufweist.

Winkelgetriebe für Elektromotoren, die als ein Schneckengetriebe realisiert sind, sind am Markt bekannt. Weiter ist es bekannt, Winkelgetriebe für Elektromotoren dadurch zu realisieren, dass eine Kegelradgetriebestufe und eine Stirnradgetriebestufe miteinander kombiniert werden.

Allerdings lassen sich mit Schneckengetrieben bei einem akzeptablen Wirkungsgrad nur relativ geringe Gesamtuntersetzungen zwischen einer Getriebeeingangswelle und einer Abtriebswelle des Winkelgetriebes realisieren. Kegelradgetriebestufen sind relativ aufwändig und teuer und besitzen im Betrieb ein relativ hohes Geräuschniveau. Darüber hinaus kann mit einer Kegelradgetriebestufe zusammen mit einer Stirnradgetriebestufe nur eine relativ geringe Gesamtuntersetzung zwischen der Getriebeeingangswelle und der Abtriebswelle des Winkelgetriebes realisiert werden, die höchstens etwa 50:1 beträgt.

Die Aufgabe der Erfindung besteht darin, ein Winkelgetriebe für einen Elektromotor zu schaffen, das bei einem guten Wirkungsgrad auch eine hohe Untersetzung ermöglicht, geräuscharm arbeitet und zudem kostengünstig herstellbar ist. Diese Aufgabe wird durch ein Winkelgetriebe gemäß Anspruch 1 und einen Elektromotor gemäß Anspruch 10 gelöst.

In einer Ausführungsform der Erfindung ist ein Winkelgetriebe der eingangs genannten Art vorgesehen, wobei der Schneckengetriebestufe mindestens eine Stirnradgetriebestufe nachgeschaltet ist. Durch die Kombination der Schneckengetriebestufe mit nachgeschalteter Stirnradgetriebestufe kann auf kostengünstige Weise eine relativ große Untersetzung zwischen einer Getriebeeingangswelle und einer Abtriebswelle des Winkelgetriebes erzielt werden. Die Untersetzung der Schneckengetriebestufe kann hinreichend gering gewählt werden, sodass ein guter Gesamtwirkungsgrad erreicht wird. Teure und geräuscherzeugende Kegelradgetriebestufen können vermieden werden. Das Winkelgetriebe kann durch Wahl der Untersetzung der einzelnen Getriebestufen leicht so angepasst werden, dass eine gewünschte Gesamtuntersetzung des Winkelgetriebes erreicht werden kann. Mit diesem zweistufigen Getriebe kann ein hoher Untersetzungsbereich von etwa 3:1 bis mindestens 120:1 realisiert werden. Aus diesem Grund eignet sich dieses Winkelgetriebe besonders als Grundlage für einen Getriebebaukasten, mit dem eine Vielzahl an bestimmten vorgegebenen anwendungsspezifischen Gesamtuntersetzungen des Winkelgetriebes leicht mit einem Satz vorgegebener Bauteile des Winkelgetriebes realisiert werden können. Darüber hinaus wird durch die Schneckengetriebestufe ein ruhiger Lauf des Winkelgetriebes erreicht. Die Kombination aus Schneckengetriebestufe und Stirnradgetriebestufe ermöglicht eine relativ schlanke Bauform des gesamten Winkelgetriebes.

In einer besonders bevorzugten Ausführungsform ist vorgesehen, dass das Winkelgetriebe zwei parallel geschaltete Stirnradgetriebestufen aufweist. Mittels der parallel geschalteten Stirnradgetriebestufen kann das Winkelgetriebe kompakt realisiert werden, und trotzdem können hohe Momente übertragen werden. Hierdurch ergibt sich eine relativ hohe Leistungsdichte des Winkelgetriebes.

Hierbei ist bevorzugt, dass die beiden Stirnradgetriebestufen zwischen einer von der Schneckengetriebestufe angetriebenen Zwischenwelle des Winkelgetriebes und einer Abtriebswelle des Winkelgetriebes angeordnet sind. Auf diese Weise kann das Winkelgetriebe einfach realisiert werden.

Hierbei ist besonders bevorzugt, dass ein Schneckenrad der Schneckengetriebestufe auf der Zwischenwelle zwischen ebenfalls auf der Zwischenwelle angeordneten Antriebszahnrädern der beiden Stirnradgetriebestufen angeordnet ist. Hierbei kann das Schneckenrad bspw. zumindest im Wesentlichen mittig zwischen den beiden Antriebszahnrädern angeordnet sein. Hierdurch wird eine einseitige Belastung der Zwischenwelle durch die Antriebszahnräder der Stirnradgetriebestufen vermieden, was die Verwendung relativ kompakter Lager für die Zwischenwelle erlaubt.

Es kann vorgesehen sein, dass mindestens eine Stirnradgetriebestufe geradverzahnt ausgeführt ist.

Es kann auch vorgesehen sein, dass mindestens eine Stirnradgetriebestufe schrägverzahnt ausgeführt ist.

Hierbei ist bevorzugt, dass beide Stirnradgetriebestufen schrägverzahnt ausgeführt sind, wobei zwei auf einer gemeinsamen Welle angeordnete Zahnräder der beiden Stirnradgetriebestufen entgegengesetzte Schrägungswinkel aufweisen. Hierdurch können von den Zahnrädern mit Schrägverzahnung auf die Zwischenwelle und/oder die Abtriebswelle ausgeübte Kräfte in axialer Richtung bezüglich dieser Wellen zumindest weitgehend kompensiert werden.

Wird vorgesehen, dass die entgegengesetzten Schrägungswinkel den gleichen Betrag aufweisen, kann zumindest annähernd eine vollständige Kompensation dieser bezüglich der Wellen in axialer Richtung wirkenden Kräfte erzielt werden.

Es ist bevorzugt, dass auf mindestens einer gemeinsamen Welle angeordnete Zahnräder unterschiedlicher Stirnradgetriebestufen bezüglich eines Drehwinkels um ihre Drehachse derart versetzt sind, dass ein von den Stirnradgetriebestufen herrührendes Spiel zumindest teilweise eliminiert wird. Unter dem Spiel der Stirnradgetriebestufen ist ein Drehflankenspiel der Zahnräder der Stirnradgetriebestufen zu verstehen, das bei einer Momentenumkehr an einer Welle des Winkelgetriebes, insbesondere an der Abtriebswelle des Winkelgetriebes auftritt.

Gemäß einer weiteren Ausführungsform der Erfindung ist ein Elektromotor mit einem Winkelgetriebe vorgesehen, wobei das Winkelgetriebe eine an einer Getriebeeingangswelle angeordnete Schneckengetriebestufe aufweist, wobei es sich bei dem Winkelgetriebe um ein Winkelgetriebe gemäß der Erfindung, dessen Ausführungsformen hier beschrieben sind, handelt.

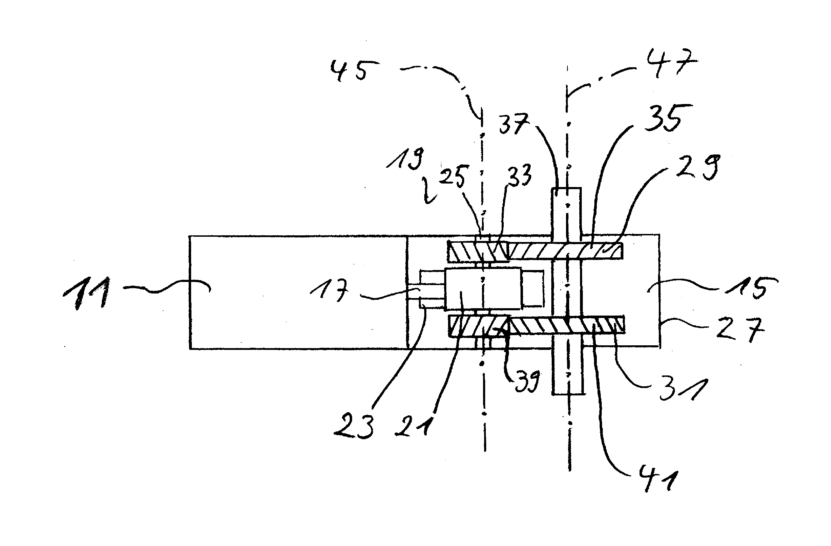

Weitere Merkmale und Vorteile der Erfindung ergeben sich aus der nachfolgenden Beschreibung, in welcher exemplarische Ausführungsformen der Erfindung anhand der Zeichnung näher erläutert werden.

Die einzige Figur zeigt eine Draufsicht auf einen Elektromotor 11 mit einem angebauten Winkelgetriebe 15. Der Elektromotor 11 weist eine Motorabtriebswelle auf, die die Getriebeeingangswelle 17 für das Winkelgetriebe 15 darstellt und nachfolgend auch so bezeichnet wird.

Die Getriebeeingangswelle 17 ist an eine Schneckengetriebestufe 19 des Winkelgetriebes 15 angeschlossen. Das Winkelgetriebe 15 kann dabei Verbindungsmittel aufweisen, mit denen die Getriebeeingangswelle 17 lösbar an die Schneckengetriebestufe 19 angekoppelt werden kann. Das Winkelgetriebe 15 kann abnehmbar an dem Elektromotor 11 befestigt sein.

Der Elektromotor 11 kann auf beliebige Weise ausgestaltet sein. Beispielsweise kann der Elektromotor 11 eine permanent erregte oder eine elektrisch erregte Gleichstrommaschine sein. Der Elektromotor 11 kann auch als eine kollektorlose Gleichstrommaschine mit elektronischer Kommutierung ausgebildet sein. Darüber hinaus kann auch vorgesehen sein, dass eine Asynchronmaschine oder eine Synchronmaschine als Elektromotor 11 vorgesehen wird.

Die Getriebeeingangswelle 17 ist drehfest mit einer Schnecke 21 der Schneckengetriebestufe 19 verbunden. Die Schnecke 21 greift in ein Schneckenrad 23 der Schneckengetriebestufe 19 ein. Das Schneckenrad 23 ist drehfest an einer Zwischenwelle 25 des Winkelgetriebes 15 angeordnet. Die Zwischenwelle 25 kann bspw. an einem Gehäuse 27 des Winkelgetriebes 15 drehbar gelagert sein.

Der Schneckengetriebestufe 19 sind eine erste Stirnradgetriebestufe 29 und eine zweite Stirnradgetriebestufe 31 nachgeschaltet.

Hierbei ist ein erstes Antriebszahnrad 33 der ersten Stirnradgetriebestufe 29 drehfest an der Zwischenwelle 25 angeordnet. Das erste Antriebszahnrad 33 greift in ein erstes Abtriebszahnrad 35 der ersten Stirnradgetriebestufe 29 ein. Das erste Abtriebszahnrad 35 ist drehfest mit einer Abtriebswelle 37 des Winkelgetriebes 15 verbunden. Die Abtriebswelle 37 kann drehbar im Gehäuse 27 gelagert sein.

In entsprechender Weise weist die zweite Stirnradgetriebestufe 31 ein zweites Antriebszahnrad 39 auf, das drehfest mit der Zwischenwelle 25 verbunden ist und in ein zweites Abtriebszahnrad 41 der zweiten Stirnradgetriebestufe 31 eingreift. Das zweite Abtriebszahnrad 41 ist drehfest mit der Abtriebswelle 37 verbunden.

Man erkennt, dass das Schneckenrad 23 zumindest im Wesentlichen mittig zwischen den beiden Antriebszahnrädern 33 und 39 auf der Zwischenwelle angeordnet sind.

In der gezeigten Ausführungsform weisen die beiden Antriebszahnräder 33, 39 eine Schrägverzahnung auf, wobei die Schrägungswinkel der beiden Antriebszahnräder 33, 39 entgegengesetzt sind. Dementsprechend weisen auch die Schrägverzahnungen der beiden Abtriebszahnräder 35, 41 entgegengesetzte Schrägungswinkel auf. Es kann vorgesehen sein, dass der Schrägungswinkel des ersten Antriebszahnrad 33 und des zweiten Antriebszahnrad 39 jeweils denselben Betrag aufweisen. In diesem Fall weisen auch die Schrägungswinkel der beiden Abtriebszahnräder 35, 41 denselben Betrag auf. Abweichend von der gezeigten Ausführungsform kann auch vorgesehen werden, dass die Zahnräder 33, 35, 39, 41 zumindest einer Stirnradgetriebestufe 29 oder 31 eine Geradverzahnung aufweisen.

Ferner ist vorgesehen, dass auf derselben Welle 25, 37 angeordnete Zahnräder 33, 35, 39, 41 um ihre jeweilige Drehachse 45, 47 derart gegeneinander verdreht (das heißt bezüglich eines Drehwinkels um ihre jeweilige Drehachse 45, 47 gegeneinander versetzt) sind, dass ein von den Stirnradgetriebestufen 29, 31 herrührendes Spiel zumindest teilweise eliminiert wird. Hierbei entspricht eine erste Mittelachse 45 einer gemeinsamen Drehachse der beiden Antriebszahnräder 33, 39, des Schneckenrads 23 sowie der Zwischenwelle 25. Eine zweite Mittelachse 47 entspricht der gemeinsamen Drehachse der beiden Abtriebszahnräder 35, 41 sowie der Abtriebswelle 37.

Insgesamt kann mit dem hier beschriebenen Winkelgetriebe 15 bzw. dem Elektromotor 11 eine relativ große Untersetzung zwischen der Getriebeeingangswelle 17 und der Abtriebswelle 37 erreicht werden, wobei außerdem relativ große Momente bei einem geringen Spiel des Winkelgetriebes 15 übertragen werden können.

Da das Winkelgetriebe 15 keine auf die Wellen 25, 37 axial wirkende Kräfte verursacht, können die Lager zum Lagern der Wellen 25, 27 einfach und kostengünstig gewählt werden.

Das Winkelgetriebe 15 lässt sich leicht an eine vorgegebene Untersetzung zwischen der Getriebeeingangswelle 17 und der Abtriebswelle 37 ohne Beeinträchtigung der Nennleistung des Winkelgetriebes oder dessen Wirkungsgrads anpassen. Deshalb eignet sich das Winkelgetriebe 15 besonders als Grundlage für ein Baukastensystem für Winkelgetriebe 15 mit kundenspezifischen Untersetzungsverhältnissen und/oder Nennleistungen. Durch den weiten möglichen Untersetzungsbereich kann dieses Baukastensystem viele mögliche Anwendungen des Winkelgetriebes 15 bzw. des Elektromotors 11 abdecken, wodurch Teile des Winkelgetriebes 15 für viele verschiedene Anwendungen verwendet werden können, was eine kostengünstige Herstellung kundenspezifischer Winkelgetriebe 15 oder Elektromotoren 11 ermöglicht.

## Patentansprüche

1. Winkelgetriebe (15) für einen Elektromotor (11), wobei das Winkelgetriebe (15) eine an einer Getriebeeingangswelle (17) angeordnete Schneckengetriebestufe (19) aufweist, **dadurch gekennzeichnet, dass** der Schneckengetriebestufe (19) mindestens eine Stirnradgetriebestufe (29, 31) nachgeschaltet ist.

2. Winkelgetriebe (15) nach Anspruch 1, **dadurch gekennzeichnet, dass** das Winkelgetriebe (15) zwei parallel geschaltete Stirnradgetriebestufen (29, 31) aufweist.

3. Winkelgetriebe (15) nach Anspruch 2, **dadurch gekennzeichnet, dass** die beiden Stirnradgetriebestufen (29, 31) zwischen einer von der Schneckengetriebestufe (19) angetriebenen Zwischenwelle (25) des Winkelgetriebes (15) und einer Abtriebswelle (37) des Winkelgetriebes (15) angeordnet sind.

4. Winkelgetriebe (15) nach Anspruch 3, **dadurch gekennzeichnet, dass** ein Schneckenrad (23) der Schneckengetriebestufe (19) auf der Zwischenwelle (25) zwischen Antriebszahnräder (33, 39) der beiden Stirnradgetriebestufen (29, 31) angeordnet ist.

5. Winkelgetriebe (15) nach einem der vorhergehenden Ansprüche, **dadurch gekennzeichnet, dass** mindestens eine Stirnradgetriebestufe (29, 31) Zahnräder (33, 35, 39, 41) mit Geradverzahnung aufweist.

6. Winkelgetriebe (15) nach einem der vorhergehenden Ansprüche, **dadurch gekennzeichnet, dass** mindestens eine Stirnradgetriebestufe (29, 31) Zahnräder (33, 35, 39, 41) mit Schrägverzahnung aufweist.

7. Winkelgetriebe (15) nach Anspruch 6, **dadurch gekennzeichnet, dass** beide Stirnradgetriebestufen (29, 31) Zahnräder (33, 35, 39, 41) mit Schrägverzahnung aufweisen, wobei zwei auf einer gemeinsamen Welle (25, 37) angeordnete Zahnräder (33, 35, 39, 41) der beiden Stirnradgetriebestufen (29, 31) entgegengesetzte Schrägungswinkel aufweisen.

8. Winkelgetriebe (15) nach Anspruch 7, **dadurch gekennzeichnet, dass** die entgegengesetzten Schrägungswinkel der beiden Stirnradgetriebestufen (29, 31) den gleichen Betrag aufweisen.

9. Winkelgetriebe (15) nach einem der Ansprüche 2 bis 8, **dadurch gekennzeichnet, dass** auf mindestens einer gemeinsamen Welle (25, 37) angeordnete Zahnräder (33, 35, 39, 41) unterschiedlicher Stirnradgetriebestufen (29, 31) um ihre Drehachse (45, 47) derart gegeneinander versetzt sind, dass ein von den Stirnradgetriebestufen (29, 31) herrührendes Spiel zumindest teilweise eliminiert wird.

10. Elektromotor (11) mit einem Winkelgetriebe (15), wobei das Winkelgetriebe (15) eine an einer Getriebeeingangswelle (17) angeordnete Schneckengetriebestufe (19) aufweist, **dadurch gekennzeichnet, dass** es sich bei dem Winkelgetriebe um ein Winkelgetriebe (15) nach einem der vorhergehenden Ansprüche handelt.
